**Europäisches Patentamt**

(19) **European Patent Office**

**Office européen des brevets**

(11) Publication number : **0 455 411 B1**

(12) # EUROPEAN PATENT SPECIFICATION

(45) Date of publication of patent specification :
**13.12.95 Bulletin 95/50**

(51) Int. Cl.⁶ : **G01S 7/02**

(21) Application number : **91303702.4**

(22) Date of filing : **24.04.91**

(54) **Correlation detector for FM signals**

(30) Priority : **30.04.90 US 516501**

(43) Date of publication of application :
**06.11.91 Bulletin 91/45**

(45) Publication of the grant of the patent :
**13.12.95 Bulletin 95/50**

(84) Designated Contracting States :
**DE FR GB**

(56) References cited :
**US-A- 4 298 985
US-A- 4 800 388
US-A- 4 860 013
SOVIET INVENTIONS ILLUSTRATED week
8623, 20 June 1986 ,abstract no. 148706 W/01,
Derwent Publications Ltd., London, GB; &
SU-A-1188901 (DANIELYAN S A) 30.10.1985**

(73) Proprietor : **RAYTHEON COMPANY
141 Spring Street
Lexington Massachusetts 02173 (US)**

(72) Inventor : **Lowenschuss, Oscar
4630 Via Or Quidea
Santa Barbara, California (US)**
Inventor : **Gordon, Bruce E.
445 S. Walnut Lane
Santa Barbara, California (US)**

(74) Representative : **Jackson, David Spence et al
REDDIE & GROSE
16, Theobalds Road
London, WC1X 8PL (GB)**

## Description

This invention relates to apparatus for indicating the presence of a source of a radio frequency signal having a time-varying frequency, the apparatus comprising an antenna coupled to supply a received radio frequency signal to an FM receiving circuit including filtering means for selecting a band of frequencies.

FM signals are well suited for measuring the distance from a transmitter to an object from which the FM signal reflects. Signals in which the frequency increases or decreases linearly ("chirped signals") are particularly well suited for these functions. For this reason, FM signals are sometimes used in altimeters on aircraft. Also, FM signals are used in radars which are often on aircraft or other moving bodies.

It is sometimes desirable to determine when an aircraft is in the vicinity. For example, in a battlefield scenario, it can be very important to detect all aircraft in the area. The FM signals emitted by altimeters or radars on aircraft can indicate the presence of the aircraft.

However, a problem results when FM altimeter or FM radar signals are used to detect aircraft. These signals are generally very directional and are not always directed at the device trying to detect the aircraft. For example, an altimeter signal is transmitted directly at the ground below the aircraft. A device trying to detect the aircraft would receive only the side lobes of the FM signal. Thus, the received FM signal would be at a relatively low level.

Detecting relatively low level signals, especially in noisy environments, can be difficult and requires a high sensitivity receiver. Existing systems use what is called a "walk-through receiver" to detect FM signals. The walk-through receiver contains a relatively narrow bandpass filter. As the FM signal changes in frequency, its frequency will, for some period of time, fall in the passband of the filter. The output of the filter will be a pulse having a non-zero value when the FM signal has a frequency in the passband of the filter. Ordinary pulse detection techniques are applied to the output of the filter to detect the pulses which signify the presence of an FM signal.

The walk-through receiver has a drawback in that only a portion of the energy in the FM signal appears in the output pulse. In effect, the signal level is attenuated. This attenuation reduces the sensitivity of the receiver and makes detection of an FM signal less likely.

With the foregoing background in mind, it is an object of this invention to provide a higher receiver sensitivity to detect FM signals.

According to one aspect of the present invention, an apparatus of the kind defined hereinbefore at the beginning is characterised in that the FM receiving circuit includes means for coupling a received- radio frequency signal through a pair of signal channels to two inputs of a mixer with one of the said channels providing a delay relative to the other channel whereby the mixer mixes the received signal with a delayed replica of the received signal, and the mixer produces an output signal having a frequency component related to the frequency difference between the mixed signals when the received signal and the delayed replica thereof have different frequencies during a common time interval, and means, including the said filtering means, coupled to the output of the mixer for so detecting a plurality of frequency components of the output signal as to indicate the presence of the source of the radio frequency signal.

According to another aspect of the invention, there is provided a method of indicating the presence of a source of a radio frequency signal having a time-varying frequency, the method comprising receiving the radio frequency signal at an antenna, coupling the received signal to an FM receiving circuit, and filtering to select a band of frequencies in the receiving circuit, characterised by the steps of dividing the received radio frequency signal into two parts and delaying one part relative to the other part, mixing the delayed part with the other part to produce an output signal having a frequency component related to the frequency difference between the delayed part and the said one part, and so detecting a plurality of frequency components in the output signal as to indicate the presence of the source of the radio frequency signal.

A preferred embodiment of this invention takes the form of a receiver for detecting aircraft by identifying signals from FM altimeters. In this receiver the received signal is split into two channels. The first channel contains a delay element. Both channels are fed to a phase detector, the output of which is fed to a filter bank. The outputs of all the filters in the filter bank are fed to a logic circuit which selects the filter output with the largest signal level and passes that output to a threshold circuit. If the signal level exceeds a predetermined threshold, the threshold circuit signals the detection of an FM signal.

Brief Description of the Drawings

The invention may be better understood by reference to the following more detailed description and accompanying drawings in which

FIG. 1 shows a block diagram of a receiver fabricated according to the invention;

FIG. 2A shows a frequency versus time plot of the inputs to the phase detector of the circuit in FIG. 1; and

FIG. 2B shows a frequency versus time plot of the output of the phase detector in FIG. 1.

Description of the Preferred Embodiments

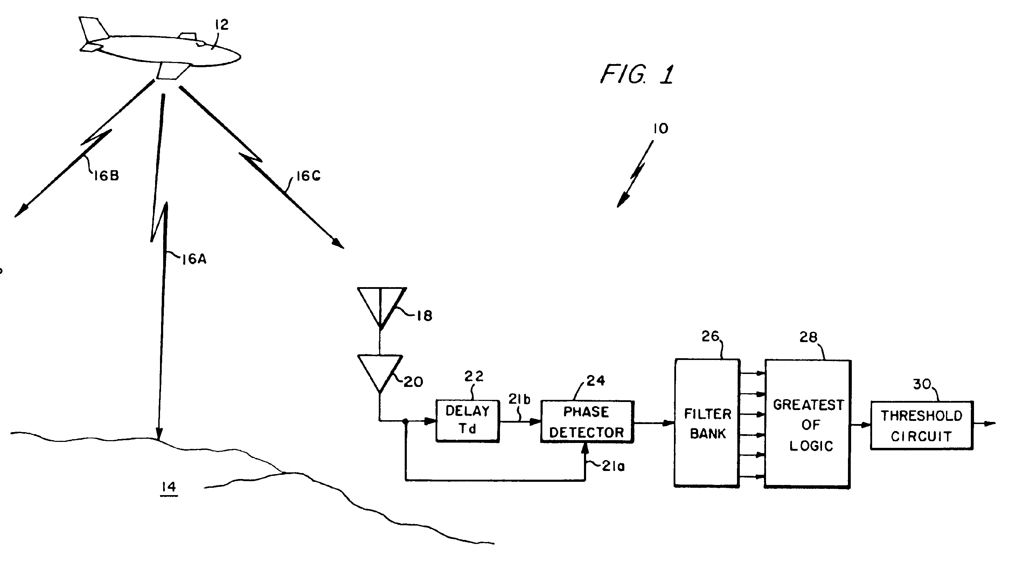

FIG. 1 shows a block diagram of a receiver 10 designed to detect the presence of an aircraft 12. Aircraft 12 contains a radio altimeter (not shown) which operates by transmitting a signal 16A towards the ground 14. Signal 16A reflects from the ground and the altimeter determines the height of aircraft 12 above ground 14 by measuring the back and forth propagation delay of signal 16A.

Most known radio altimeters use FM signals for signal 16A. In particular, chirped signals are used. Thus, receiver 10 detects the presence of aircraft 10 by detecting the presence of a chirped signal.

As shown in FIG. 1, signal 16A is directed from aircraft 12 to ground 14. Signal 16A is not necessarily received by receiver 10. However, the altimeter (not shown) on aircraft 12 invariably transmits sidelobe signals such as signals 16b and 16c. At least a portion of sidelobe signals 16b and 16c will be received by receiver 10 when aircraft 12 is sufficiently close to receiver 10. Thus, receiver 10 will most likely detect the sidelobe signals 16b or 16c.

Sidelobe signal 16c impinges on antenna 18 of receiver 10. Here, antenna 18 is some antenna of known construction. Preferably, antenna 18 has a beam pattern with broad angular coverage. The received signal is amplified by amplifier 20. Amplifier 20 is of known construction.

The amplified signal is split into two paths. One path runs directly to input 21a of phase detector 24. The second path runs to input 21b of phase detector 24 through delay element 22. Delay element 22 is any substantially non-dispersive delay element of known construction. Delay element 22 delays the signal by an amount $T_d$.

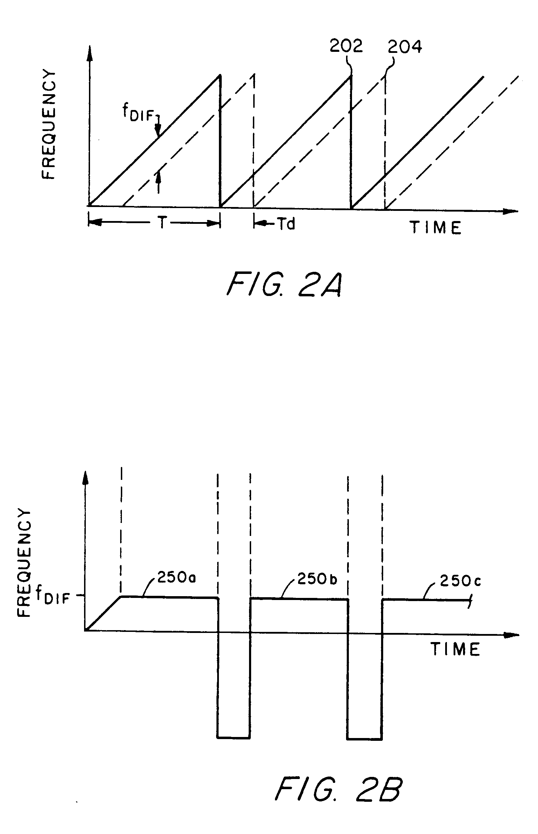

The signals at inputs 21a and 21b are shown in FIG. 2A. FIG. 2A shows a received waveform 202. Waveform 202 sweeps from a frequency $f_{min}$ to $f_{max}$ in T seconds. These frequency sweeps are repeated at regular intervals. The type of signal received will dictate the numeric values of the parameters of signal 202. The operating characteristics of the circuit elements in FIG. 1 are selected accordingly. For example, if T had a value of 10ms and the difference between $f_{max}$ and $f_{min}$ were 100MHz, a value of 60ns would be an appropriate value of $T_d$. In general $T_d$ is selected to be approximately as given by Eq. 1:

$$T_d = \frac{1}{2} \frac{1}{(f_{max} - f_{min})} \quad \text{Eq. 1}$$

Signal 202 is applied to input 21a of phase detector 24. Signal 204 is a replica of signal 202, but delayed by an amount $T_d$. Signal 204 is fed to input 21b of phase detector 24.

Phase detector 24 is a phase detector of known construction. Phase detector 24 may also be thought of as a mixer. The output of phase detector 24 is a signal with a frequency equal to the difference between the signals at inputs 21a and 21b.

FIG. 2B shows the output of phase detector 24 for input signals 202 and 204. As seen in FIG. 2B, the major portion of the output of phase detector 24 consists of segments 250a, 250b, 250c... which are of constant frequency $f_{DIF}$.

The output of phase detector 24 is fed to filter bank 26. Filter bank 26 is here an FFT processor and an analog to digital converter of known construction. The filtering properties of FFT processors are well known. However, other techniques for fabricating filter bank 26 could be employed.

Filter bank 26 has a plurality of outputs. Each output represents the cumulative strength of signals in a particular frequency band averaged over some time window (called the "integration time of the FFT"). The signal of FIG. 2B will produce an output in the band containing the frequency $f_{DIF}$. The output signal from phase detector 24 will also produce signals on outputs of filter bank 26 corresponding to other frequency bands. However, these other signals will be at a lower average level because the signal of FIG. 2B has those frequencies for much shorter periods of time.

The outputs of filter bank 26 are fed to logic circuit 28 which selects the output with the largest magnitude. With filter bank 26 implemented with an FFT processor, the outputs of filter bank 26 will be digital words. Thus, logic circuit 28 can be constructed using conventional digital logic circuit design techniques.

The output of logic circuit 28 indicates the level of the largest output of filter bank 26. This level is provided to threshold circuit 30. If the level of the largest signal exceeds a predetermined threshold, threshold circuit 30 produces an output indicating a chirped signal has been detected. This output may be used by some utilization device (not shown) which may interpret the output as indicating the presence of an aircraft.

Having described one embodiment of the invention, it will be apparent to one of skill in the art that various modifications can be made without departing from the invention.

For example, the threshold used by threshold circuit 30 could be set adaptively. In other words, the threshold could be increased if many RF signals and noise are detected. Conversely, if the RF environment is relatively free of noise and other signals, the threshold can be lowered.

As another modification, logic circuit 28 could be modified to sequentially pass to threshold circuit 30 several of the largest signals from filter bank 26. If several aircraft are present, several signals might exceed the threshold set by threshold circuit 30 and the OUTPUT could indicate the presence of several aircraft.

The disclosed system could also be modified to provide more information about the detected chirped signal. As shown in FIG. 2B, signal 202 of FIG. 2A produces a signal out of phase detector 24 with mainly a frequency $f_{DIF}$. A little thought will reveal that $f_{DIF}$ is the increase in frequency of signal 202 in time $T_d$. The value of $f_{DIF}$ thus depends on how fast the frequency of signal 202 is changing (sometimes called the "chirp slope"). Certain radio altimeters or FM radios will use different chirp slopes and thus produce different values of $f_{DIF}$. By determining in which frequency band the largest signal falls, the chirp slope of the signal can be determined. Knowing the chirp slope of the signal which produced an OUTPUT signal may allow some utilization device to identify the source of the chirped signal. Along the same lines, logic circuit 28 could be modified so that the largest signal was selected from one of a few selected frequency bands corresponding to chirp slopes of interest.

## Claims

1. Apparatus for indicating the presence of a source of a radio frequency signal having a time-varying frequency, the apparatus comprising an antenna (18) coupled to supply a received radio frequency signal to an FM receiving circuit including filtering means (26) for selecting a band of frequencies, characterised in that the FM receiving circuit includes means (20,22,21a,21b) for coupling a received radio frequency signal through a pair of signal channels to two inputs of a mixer (24) with one of the said channels (20,22,21a) providing a delay relative to the other channel (20,21b) whereby the mixer (24) mixes the received signal with a delayed replica of the received signal, and the mixer (24) produces an output signal having a frequency component related to the frequency difference between the mixed signals when the received signal and the delayed replica thereof have different frequencies during a common time interval, and means (26,28,30), including the said filtering means (26), coupled to the output of the mixer (24) for so detecting a plurality of frequency components of the output signal as to indicate the presence of the source of the radio frequency signal.

2. Apparatus according to claim 1, characterised in that the said one channel includes a delay element (22).

3. Apparatus according to claim 2, characterised in that the means for detecting the frequency components comprises a filter bank (26) fed by the output of the mixer (24) and having a plurality of outputs each of which provides an indication of the level of a respective range of frequency components in the said output signal, logic circuitry (28) coupled to the outputs of the filter bank (26) and adapted to select that one of the levels indicated at the outputs of the filter bank (26) which is the highest present, and producing an output indicative of the selected level, and a threshold circuit (30) coupled to the logic circuitry (28) to produce an output indicative of the presence of the source of the radio frequency signal when the output from the logic circuitry represents a level above a predetermined threshold.

4. Apparatus according to claim 3, characterised in that the filter bank (26) comprises an analog to digital converter arranged to convert the output signal of the mixer (24), and an FFT processor arranged to process the digital output from the converter.

5. Apparatus according to claim 1, characterised in that the said one channel includes a delay element (22), the mixer comprises a phase detector (24) having one input coupled to the antenna and the other coupled to the delay element (22), the means for detecting the frequency components comprises a filter bank (26) having an input coupled to the phase detector (24) and a plurality of outputs, and logic means (28,30) for selecting the largest signal level amongst those output by the filter bank (26).

6. Apparatus according to claim 5, characterised in that the logic means includes thresholding means (30) for producing an output indicative of a signal from the said source when the selected level exceeds a predetermined threshold.

7. A method of indicating the presence of a source of a radio frequency signal having a time-varying frequency, the method comprising receiving the radio frequency signal at an antenna (18), coupling the receiving signal to an FM receiving circuit, and filtering to select a band of frequencies in the receiving circuit, characterised by the steps of dividing the received radio frequency signal into two parts and delaying (22) one part relative to the other part, mixing (24) the delayed part with the other part to produce an output signal having a frequency component related to the frequency difference between the delayed part and the said one part, and so detecting (26,28,30) a plurality of frequency components in the output signal as to indicate the presence of the source of the radio frequency signal.

8. A method according to claim 7, characterised in that the step of detecting a plurality of frequency components comprises selecting (26,28) from a predetermined set of frequency bands the frequency band in which the output signal has frequency components with the greatest magnitude, and indicating (30) the presence of the source of the radio frequency signal when the magnitude of the frequency components in the selected frequency band exceeds a predetermined threshold.

## Patentansprüche

1. Einrichtung zur Anzeige des Vorhandenseins einer Quelle eines Hochfrequenzsignals mit zeitveränderlicher Frequenz, wobei die Einrichtung eine Antenne (18) aufweist, die so beschaltet ist, daß sie ein empfangenes Hochfrequenzsignal an eine FM-Empfangsschaltung ankoppelt, die Filtermittel (26) enthält, um ein Frequenzband auszuwählen, dadurch gekennzeichnet, daß die FM-Empfangsschaltung Mittel (20, 22, 21a, 21b) zur Ankopplung eines empfangenen Hochfrequenzsignals über ein Paar von Signalkanälen an zwei Eingänge eines Mischers (24) aufweist, wobei einer der genannten Kanäle (20, 22, 21b) eine Verzögerung relativ zu dem anderen Kanal (20, 21a) aufprägt, derart, daß der Mischer (24) das empfangene Signal mit einer verzögerten Wiederholung des empfangenen Signals mischt und ein Ausgangssignal erzeugt, das eine Frequenzkomponente entsprechend der Frequenzdifferenz zwischen den gemischten Signalen besitzt, wenn das empfangene Signal und die verzögerte Wiederholung dieses Signals während eines gemeinsamen Zeitintervalls unterschiedliche Frequenzen aufweisen, und daß Mittel (26, 28, 30), welche die genannten Filtermittel (26) enthalten, an den Ausgang des Mischers (24) angekoppelt sind, um eine Mehrzahl von Frequenzkomponenten des Ausgangssignals derart zu detektieren, daß das Vorhandensein der Quelle des Hochfrequenzsignals angezeigt wird.

2. Einrichtung nach Anspruch 1, dadurch gekennzeichnet, daß der genannte eine Kanal ein Verzögerungselement (22) enthält.

3. Einrichtung nach Anspruch 2, dadurch gekennzeichnet, daß die Mittel zur Detektion der Frequenzkomponenten eine Filterreihe (26), die von dem Ausgang des Mischers (24) gespeist ist und eine Mehrzahl von Ausgängen aufweist, von denen jeder eine Anzeige des Pegels eines jeweiligen Bereichs von Frequenzkomponenten in dem genannten Ausgangssignal anzeigt, ferner eine logische Schaltung (28), die an die Ausgänge der Filterreihe (26) angekoppelt ist und so ausgebildet ist, daß sie denjenigen der an den Ausgängen der Filterreihe (26) angezeigten Pegel auswählt, welcher der gegenwärtig höchste ist und einen Ausgang hervorbringt, der den ausgewählten Pegel anzeigt, sowie eine Schwellwertschaltung (30) enthält, welche an die logische Schaltung (28) angekoppelt ist, um einen Ausgang hervorzubringen, der das Vorhandensein der Quelle des Hochfrequenzsignals anzeigt, wenn der Ausgang von der logischen Schaltung einen Pegel oberhalb eines vorbestimmten Schwellwerts repräsentiert.

4. Einrichtung nach Anspruch 3, dadurch gekennzeichnet, daß die Filterreihe (26) einen Analog/Digital-Umsetzer enthält, der dazu dient, das Ausgangssignal des Mischers (24) umzuwandeln, und außerdem einen FFT-Prozessor enthält, der zur Verarbeitung des digitalen Ausgangs von dem Umsetzer dient.

5. Einrichtung nach Anspruch 1, dadurch gekennzeichnet, daß der genannte eine Kanal ein Verzögerungselement (22) enthält, daß der Mischer einen Phasendetektor (24) umfaßt, der mit einem Eingang an die Antenne angekoppelt ist und mit dem anderen Eingang an das Verzögerungselement (22) angekoppelt ist, daß die Mittel zur Detektierung der Frequenzkomponenten eine Filterreihe (26) enthalten, die einen an den Phasendetektor (24) angeschlossenen Eingang und eine Mehrzahl von Ausgängen besitzt, und daß eine logische Schaltung (28, 30) zur Auswahl des größten Signalpegels unter jenen Ausgängen der Filterreihe (26) vorgesehen ist.

6. Einrichtung nach Anspruch 5, dadurch gekennzeichnet, daß die logische Schaltung ein Schwellenwertgerät (30) enthält, um einen Ausgang zu erzeugen, der eine Anzeige eines Signals von der genannten Quelle bildet, wenn der ausgewählte Pegel einen vorbestimmten Schwellwert übersteigt.

7. Verfahren zur Anzeige des Vorhandenseins einer Quelle eines Hochfrequenzsignals mit zeitveränderlicher Frequenz, wobei das Verfahren vorsieht, das Hochfrequenzsignal an einer Antenne (18) zu empfangen, das empfangene Signal an eine FM-Empfangsschaltung anzukoppeln und eine Filterung vorzunehmen, um ein Band von Frequenzen in der Empfangsschaltung auszuwählen, gekennzeichnet durch die Schritte des Aufteilens des empfangenen Hochfrequenzsignals in zwei Teile und Verzögern (22) eines Teils relativ zu dem anderen Teil, des Mischens (24) des verzögerten Teils mit dem anderen Teil zur Erzeugung eines Ausgangssignals mit einer Frequenzkomponente, welche der Frequenzdifferenz zwischen dem verzögerten Teil und dem genannten einen Teil entspricht, sowie des Detektierens (26, 28, 30) einer Mehrzahl von Frequenzkomponenten in dem Ausgangssignal in solcher Weise, daß eine Anzeige des Vorhandenseins der Quelle des Hochfrequenzsignals erhalten wird.

8. Verfahren nach Anspruch 7, dadurch gekennzeichnet, daß der Schritt des Detektierens einer Mehrzahl von Frequenzkomponenten das Auswählen (26, 28) desjenigen Frequenzbands aus einer vorbestimmten Gruppe von Frequenzbändern umfaßt, in welchem das Ausgangssignal Frequenzkomponenten mit dem größten Betrag aufweist und daß das Detektieren ferner das Anzeigen (30) des Vorhandenseins der Quelle des Hochfrequenzsignals umfaßt, wenn die Größe der Frequenzkomponenten in dem ausgewählten Frequenzband eine vorbestimmte Schwelle übersteigt.

## Revendications

1. Dispositif pour indiquer la présence d'une source d'un signal radiofréquence ayant une fréquence variant dans le temps, le dispositif comprenant une antenne (18) couplée pour fournir un signal radiofréquence reçu à un circuit de réception FM contenant des moyens de filtrage (26) pour choisir une bande de fréquences, caractérisé en ce que le circuit de réception FM contient des moyens (20, 22, 21a, 21b) de couplage d'un signal de fréquence radio reçu par deux des canaux de signaux à deux entrées d'un mélangeur (24), un desdits canaux (20, 22, 21b) fournissant un retard par rapport à l'autre canal (20, 21a) ce qui fait que le mélangeur (24) mélange le signal reçu avec une réplique retardée du signal reçu, et le mélangeur (24) produit un signal de sortie ayant une composante de fréquence en rapport avec la différence de fréquence entre les signaux mélangés lorsque le signal reçu et la réplique retardée de celui-ci ont des fréquences différentes pendant un intervalle de temps commun, et des moyens (26, 28, 30), contenant ledit moyen de filtrage (26), couplés à la sortie du mélangeur (24) pour détecter une pluralité de composantes de fréquence du signal de sortie de façon à indiquer la présence de la source du signal radiofréquence.

2. Dispositif selon la revendication 1, caractérisé en ce que ledit premier canal contient un élément à retard (22).

3. Dispositif selon la revendication 2, caractérisé en ce que les moyens pour détecter les composantes de fréquence comprennent un banc de filtres (26) alimenté par la sortie du mélangeur (24) et ayant une pluralité de sorties, chacune d'elles produisant une indication du niveau d'une gamme respective de composantes de fréquence dans ledit signal de sortie, un ensemble de circuits logiques (28) couplé aux sorties du banc de filtres (26) et adapté pour choisir celui des niveaux indiqués aux sorties du banc de filtres (26) qui est le plus présent, et produisant une sortie indiquant le niveau choisi, et un circuit de seuil (30) couplé à l'ensemble de circuits logiques (28) pour produire une sortie indiquant la présence de la source du signal radiofréquence lorsque la sortie de l'ensemble de circuits logiques représente un niveau au-dessus d'un seuil prédéterminé.

4. Dispositif selon la revendication 3, caractérisé en ce que le banc de filtre (26) comprend un convertisseur analogique/numérique conçu pour convertir le signal de sortie du mélangeur (24), et un processus FFT conçu pour traiter la sortie numérique provenant du convertisseur.

5. Dispositif selon la revendication 1, caractérisé en ce que ledit premier canal contient un élément à retard (22), en ce que le mélangeur comprend un détecteur de phase (24) ayant une entrée couplée à l'antenne et l'autre couplée à l'élément à retard (22), en ce que les moyens pour détecter les composantes de fréquence comprennent un banc de filtres (26) ayant une entrée couplée au détecteur de phase (24) et une pluralité de sorties, et des moyens logiques (28, 30) pour choisir le niveau de signal le plus grand parmi ceux émis par le banc de filtres (26).

6. Dispositif selon la revendication 5, caractérisé en ce que les moyens logiques contiennent un moyen (30) de fixation d'un seuil pour produire une sortie représentative d'un signal provenant de ladite source lorsque le niveau choisi dépasse un seuil prédéterminé.

7. Procédé pour indiquer la présence d'une source d'un signal radiofréquence ayant une fréquence variant dans le temps, le procédé comprenant la réception du signal radiofréquence sur une antenne (18), le couplage du signal de réception à un circuit de réception FM, et le filtrage pour choisir une bande de fréquences dans le circuit de réception, caractérisé par les étapes de division du signal radiofréquence reçu en deux parties et l'application d'un retard (22) à une partie par rapport à l'autre partie, le mélange (24) de la partie retardée avec l'autre partie pour produire un signal de sortie ayant une composante de fréquence en rapport avec la différence de fréquence entre la partie retardée et ladite première partie, et la détection (26, 28, 30) d'une pluralité de composantes de fréquence dans le signal de sortie de sorte d'indiquer la présence de la source du signal radiofréquence.

8.  Procédé selon la revendication 7, caractérisé en ce que l'étape de détection d'une pluralité de composantes de fréquence comprend la sélection (26, 28) à partir d'un ensemble prédéterminé de bandes de fréquences de la bande de fréquences dans laquelle le signal de sortie possède des composantes de fréquence avec la plus grande amplitude, et l'indication (30) de la présence de la source du signal radiofréquence lorsque l'amplitude des composantes de fréquence dans la bande de fréquences choisie dépasse un seuil prédéterminé.

FIG. 1

EP 0 455 411 B1

FIG. 2A

FIG. 2B